(19) Europäisches Patentamt
European Patent Office
Office européen des brevets

(11) EP 2 415 821 B1

(12) **EUROPEAN PATENT SPECIFICATION**

(45) Date of publication and mention of the grant of the patent:
**10.04.2019 Bulletin 2019/15**

(21) Application number: **10761497.6**

(22) Date of filing: **16.02.2010**

(51) Int Cl.:
***C08J 3/05*** *(2006.01)* ***C08J 3/075*** *(2006.01)*
***C08B 15/02*** *(2006.01)*

(86) International application number:
**PCT/JP2010/052278**

(87) International publication number:
**WO 2010/116795 (14.10.2010 Gazette 2010/41)**

(54) **PROCESS FOR PRODUCING CELLULOSE GEL DISPERSION**

VERFAHREN ZUR HERSTELLUNG EINER ZELLULOSEGELDISPERSION

PROCÉDÉ POUR PRODUIRE UNE DISPERSION DE GEL DE CELLULOSE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009082712**

(43) Date of publication of application:
**08.02.2012 Bulletin 2012/06**

(73) Proprietor: **Nippon Paper Industries Co., Ltd.**
**Tokyo 114-0002 (JP)**

(72) Inventors:
- **MIYAWAKI, Shoichi**
  **Tokyo 114-0002 (JP)**
- **KATSUKAWA, Shiho**
  **Tokyo 114-0002 (JP)**
- **ABE, Hiroshi**
  **Tokyo 114-0002 (JP)**
- **IIJIMA, Yuko**
  **Tokyo 114-0002 (JP)**
- **ISOGAI, Akira**
  **Tokyo 113-0021 (JP)**

(74) Representative: **Hamer, Christopher K. et al**
**Mathys & Squire LLP**
**The Shard**
**32 London Bridge Street**
**London SE1 9SG (GB)**

(56) References cited:
**JP-A- 2006 016 519**
**JP-T- 11 501 684**
**JP-T- 2001 509 199**
**JP-T- 2003 528 935**

- **TSUGUYUKI SAITO ET AL.: ""Cellulose nanofibers prepared by TEMPO-mediated oxidation of native cellulose"", BIOMACROMOLECULES, vol. 8, no. 8, 13 July 2007 (2007-07-13), pages 2485-2491, XP002767564,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 415 821 B1

## Description

### TECHNICAL FIELD

The present invention relates to methods of producing a novel cellulose gel dispersion liquid which has low water absorbency and does not tend to swell.

### BACKGROUND ART

It is known that when a cellulosic material is treated in the presence of a catalytic amount of 2,2,6,6-tetramethyl-1-piperidin-N-oxyradical (hereinafter "TEMPO") and sodium hypochlorite which is an inexpensive oxidizing agent, carboxyl groups are introduced efficiently into the cellulose microfibril surface, and the resulting cellulosic material in which the carboxyl groups have been introduced can be formed into an aqueous dispersion of cellulose nanofibers by use of a high-speed agitator homogenizer or the like with small defibration energy (Non-patent Document 1). This is considered to be due to microscopic spaces between cellulose chains which are formed by the action of charge repulsive force between the carboxyl groups introduced in the cellulosic material.

Cellulose nanofibers are a novel water dispersible material which is biodegradable. Carboxyl groups are introduced in the surface of cellulose nanofibers by oxidation reaction, making it possible to freely modify the cellulose nanofibers using the carboxyl groups as base points. Further, since the cellulose nanofibers obtained by the above method are in the form of a dispersion liquid, the qualities can also be modified by blending the cellulose nanofibers with various water-soluble polymers or forming a composite of the cellulose nanofibers with an organic or inorganic pigment. Further, the cellulose nanofibers can also be formed into a sheet or fiber. Application of cellulose nanofibers to highly functional wrapping materials, transparent organic plate materials, highly functional fibers, separation membranes, regenerative biomaterials and the like utilizing the above characteristics of cellulose nanofibers is expected. In the future, development of novel highly functional products indispensable for developing a recycling-based, safe and secured society by making maximum use of the characteristics of cellulose nanofibers is expected.

Tsuguyuki, Saito et al., Biomacromolecules, Vol. 8, no. 8, 13 July 2007, pages 2485 to 2491, discloses cellulose nanofibers prepared by TEMPO-mediated oxidation of native cellulose.

### CITATION LIST

### NON-PATENT DOCUMENT

Non-patent Document 1: Saito, T., et al., Cellulose Commun., 14 (2), 62 (2007)

### SUMMARY OF INVENTION

### TECHNICAL PROBLEM

However, the aqueous dispersion of cellulose nanofibers obtained by the above method is in a highly hydrophilic state, because the carboxyl groups present in the surface of the cellulose nanofibers form salts such as sodium salts, causing problems that a film or fiber prepared from the nanofiber dispersion tends to absorb moisture and swell under a highly humid environment which results in a change in the size of the film or fiber, or that desired highly functional properties cannot be obtained.

A possible solution to the above problems is to reduce the hydrophilicity by acidifying the carboxyl groups in salt form (e.g., -COONa) into carboxyl groups in acid form (-COOH). However, when carboxyl groups of oxidized pulp are converted into acid form (-COOH), the action of charge repulsive force between the carboxyl groups is reduced, causing a problem that like ordinary pulp, the oxidized pulp cannot be formed into nanofibers even with an apparatus with high shear force.

In response to the foregoing, the present invention is aimed at providing a method of efficiently producing a cellulose gel dispersion liquid which has low water absorbency and does not tend to swell.

### SOLUTION TO PROBLEM

As a result of intensive and extensive studies, the present inventors found that a novel material cellulose gel dispersion liquid which had low water absorbency and did not tend to swell could be produced by preparing a cellulose nanofiber dispersion liquid from an oxidized cellulosic material, acidifying the cellulose nanofiber dispersion liquid to form a gelatinous substance, washing the gelatinous substance with water, slurrying the gelatinous substance to form

a dispersion liquid, and subjecting the dispersion liquid to mechanical treatment. The present inventors also found that a cellulose gel dispersion liquid which not only had low water absorbency and did not tend to swell but also was excellent in flowability could be produced by subjecting a dispersion liquid obtained by slurrying a gelatinous substance to ultraviolet radiation treatment, cellulase treatment, or oxidation decomposition treatment with ozone and hydrogen peroxide, as necessary, prior to mechanical treatment. By these findings, the present invention was completed.

ADVANTAGEOUS EFFECTS OF INVENTION

The cellulose gel dispersion liquid of the present invention has characteristics that it has low water absorbency and does not tend to swell. Further, when ultraviolet radiation treatment, cellulase treatment, or oxidation decomposition treatment with ozone and hydrogen peroxide is conducted prior to mechanical treatment, the mechanical treatment can be conducted efficiently with low power consumption and, furthermore, the resulting cellulose gel dispersion liquid not only has low water absorbency and does not tend to swell but also is excellent in flowability and is thus easy to handle and process; for example, the cellulose gel dispersion liquid can be blended with various polymers and used.

DESCRIPTION OF EMBODIMENTS

In the present invention, a cellulosic material is oxidized with an oxidizing agent in the presence of (1) an N-oxyl compound and (2) a bromide, an iodide or a mixture thereof, and then the oxidized cellulosic material is subjected to defibration and dispersion treatment to prepare a cellulose nanofiber dispersion liquid, followed by acidification of the dispersion liquid so that cellulose nanofibers aggregate to form a gelatinous substance. Ultimately, the gelatinous substance is treated mechanically to obtain a cellulose gel dispersion liquid having characteristics that it has high flowability and does not tend to swell.

(N-oxyl compound)

As the N-oxyl compound used in the present invention, any compounds which can promote desired oxidation reaction may be used. For example, the N-oxyl compound used in the invention includes the compound represented by the following general formula (Formula 1):

[Formula 1]

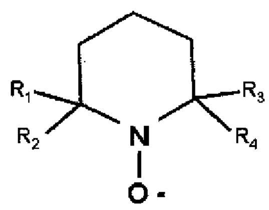

Formula 1

wherein $R_1$ to $R_4$ represent the same or different alkyl groups having about 1 to 4 carbon atoms.

Among the compounds represented by Formula 1, 2,2,6,6-tetramethyl-1-piperidin-oxyradical (hereinafter "TEMPO") and 4-hydroxy-2,2,6,6-tetramethyl-1-piperidin-oxyradical (hereinafter "4-hydroxy TEMPO") are preferred. The N-oxyl compounds represented by any one of Formulas 2 to 4 below, i.e., 4-hydroxy TEMPO derivatives to which appropriate hydrophobicity is imparted by etherification of the hydroxyl group of 4-hydroxy TEMPO with an alcohol or esterification with carboxylic acid or sulfonic acid, are preferred, because they are inexpensive, and uniform oxidized cellulose can be obtained.

[Formula 2]

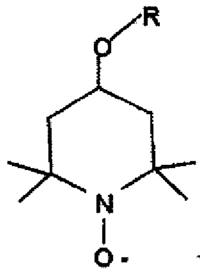

Formula 2

[Formula 3]

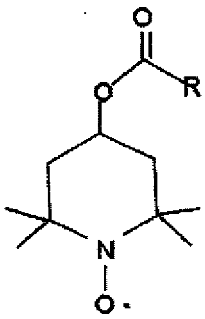

Formula 3

[Formula 4]

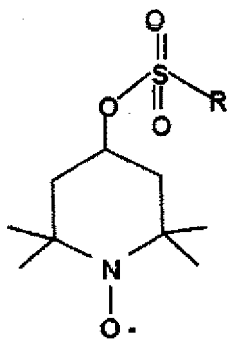

Formula 4

In Formulas 2 to 4, R is a straight or branched carbon chain having 4 or less carbon atoms.

Further, a radical of the N-oxyl compound represented by Formula 5 below, i.e., aza-adamantane type nitroxy radical, can be used preferably, since such compounds can shorten reaction time, and promote to produce a uniform cellulose nanofiber.

[Formula 5]

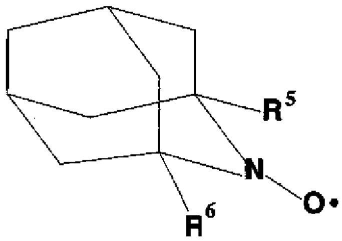

Formula 5

In Formula 5, $R^5$ and $R^6$ represent the same or different hydrogen atoms or $C_1$-$C_6$ straight or branched alkyl groups.

The amount of N-oxyl compound used is not particularly limited, as long as it is a catalytic amount which enables the cellulosic material to be converted into nanofibers. For example, its amount is of 0.01 to 10 mmol, preferably 0.01 to 1 mmol, more preferably 0.05 to 0.5 mmol, based on 1 g (absolute dry weight) of the cellulosic material.

(Bromide or iodide)

As the bromide or iodide used in the oxidation of cellulosic material, a compound which can be dissociated in water and ionized, for example, an alkali metal bromide, an alkali metal iodide or the like can be used. The amount of the bromide or iodide used can be selected within a range which can promote the oxidation reaction. For example, the amount is of the order of 0.1 to 100 mmol, preferably 0.1 to 10 mmol, more preferably 0.5 to 5 mmol, based on 1 g (absolute dry weight) of the cellulosic material.

(Oxidizing agent)

As the oxidizing agent used in the oxidation of cellulosic material, any oxidizing agent can be used, as long as it can proceed with the intended oxidation reaction, such as a halogen, a hypohalogenous acid, a halogenous acid, a perhalogenic acid, or a salt thereof, a halogen oxide, or a peroxide. From the viewpoint of the nanofiber manufacturing cost, the preferred oxidizing agent to be used is sodium hypochlorite which is used currently most widely in industrial processes, which is inexpensive, and which imposes a minimal environmental load. The amount of the oxidizing agent used can be selected within a range which can promote the oxidation reaction. For example, the amount is of 0.5 to 500 mmol, preferably 0.5 to 50 mmol, more preferably 2.5 to 25 mmol, based on 1 g (absolute dry weight) of the cellulosic material.

(Cellulosic material)

The cellulosic material used in the present invention is not particularly limited, and includes kraft pulp or sulfite pulp of various wood origins, powdery cellulose formed by pulverizing such pulp by a high pressure homogenizer, a mill or the like, and a microcrystalline cellulose powder formed by purifying such a material by chemical treatment such as acid hydrolysis. Plants such as kenaf, hemp, rice, bagasse and bamboo can also be used. Among these cellulosic materials, use of bleached kraft pulp, bleached sulfite pulp, powdery cellulose, or microcrystalline cellulose powder is preferred in terms of mass production and cost. Use of powdery cellulose and microcrystalline cellulose powder is especially preferred, because a cellulose gel dispersion liquid having low water absorbency and high flowability can be produced.

Powdery cellulose is a rod-like particle of microcrystalline cellulose which is obtained by removing amorphous parts from wood pulp with an acid hydrolysis treatment, and pulverizing and sieving it. In the powdery cellulose, the degree of polymerization of cellulose is preferably 100 to 500, the crystallinity of powdery cellulose measured by X-ray diffraction is preferably 70 to 90%, and the volume average particle size measured by laser diffraction is preferably not more than 100 μm, more preferably not more than 50 μm. By using powdery cellulose having a volume average particle size of not less than 100 μm, a cellulose nanofiber dispersion liquid excellent in flowability can be prepared. As the powdery cellulose used in the present invention, for example, a rod-like crystalline cellulose powder having a certain particle size distribution which is obtained by a method comprising subjecting a selected pulp to an acid hydrolysis treatment to obtain an undecomposed residue, and purifying, drying, pulverizing and sieving the residue, may be used, or a commercially available powdery cellulose such as KC FLOCK$^R$ available from NIPPON PAPER CHEMICALS Corporation, CEOLUS$^R$ available from ASAHI KASEI CHEMICALS Corporation, and AVICEL$^R$ available from FMC Corporation may also be used.

(Oxidation reaction conditions)

The method of the present invention has the feature that it can proceed with the oxidation reaction smoothly even under mild conditions. Thus, the reaction temperature may be room temperature of 15 to 30°C. As the reaction proceeds, carboxyl groups form in the cellulose, and a decline in the pH of the reaction mixture is observed. To proceed with the oxidation reaction efficiently, it is desirable to maintain the pH of the reaction mixture at a value of 9 to 12, preferably 10 to 11 with the addition of alkaline solution such as an aqueous solution of sodium hydroxide. The reaction time in the oxidation reaction is not particularly limited, and can be set as appropriate; for example, the reaction time is about 0.5 to 4 hours.

(Defibration and dispersion treatment)

In the present invention, the oxidized cellulosic material is irradiated with ultraviolet light and thereafter subjected to defibration and dispersion treatment. Examples of the type of a defibrator/disperser include a high-speed rotation type apparatus, a colloid mill type apparatus, a high pressure type apparatus, a roll mill type apparatus, an ultrasound type apparatus, etc. It is especially preferred to use a high shear mixer equipped with a rotary blade. Further, in order to efficiently obtain a cellulose nanofiber dispersion liquid having excellent transparency and flowability, it is preferable to use a wet high pressure or ultrahigh pressure homogenizer which enables dispersion under a condition of 50 MPa or higher, preferably 100 MPa or higher, more preferably 140 MPa or higher.

(Cellulose nanofiber)

The cellulose nanofiber obtained above is single cellulose microfibril having a width of 2 to 5 nm and a length of 1 to 5 μm. As used herein, the term "to form into nanofibers" refers to processing of a cellulosic material into cellulose nanofibers which are single microfibrils of cellulose with a width of 2 to 5 nm and a length of 1 to 5 μm.

(Acidification treatment)

In the present invention, the dispersion liquid of cellulose nanofibers obtained by the above defibration and dispersion treatment is acidified so that the cellulose nanofibers aggregate to form a gelatinous substance. The type of an acid used in the acidification treatment of the present invention may be an inorganic or organic acid. Examples of an inorganic acid that can be used include mineral acids such as sulfuric acid, hydrochloric acid, nitric acid, sulfurous acid, nitrous acid, phosphoric acid, residual acids in a chlorine dioxide generator, etc. Sulfuric acid is preferred. Examples of an organic acid that can be used include acetic acid, lactic acid, oxalic acid, citric acid, formic acid, etc. The pH during acid treatment is preferably 2 to 6, more preferably 3 to 5. The amount of acid added is not particularly limited, and addition of acid may be stopped when the cellulose nanofibers aggregate and a translucent gelatinous substance precipitates.

(Treatment to form slurry)

In the present invention, the gelatinous substance obtained by the above acidification treatment is washed with water and then slurried to form a dispersion liquid. The slurrying can be conducted by adding water to an aggregated gelatinous substance having been washed sufficiently with water, reducing the particle size of the gelatinous substance such that the gelatinous substance will not sink in a short period of time, and dispersing the gelatinous substance with an ordinary slurrying apparatus such as a mixer. As a result, a viscous translucent slurry (also referred to as "gelatinous substance dispersion liquid" in the present invention) is obtained.

(Mechanical treatment)

In the present invention, the gelatinous substance dispersion liquid is subjected to mechanical treatment to prepare a cellulose gel dispersion liquid. Examples of the type of an apparatus used include a bead mill type disperser using media, a high-speed rotation type disperser using no media, a colloid mill type disperser, a high pressure type disperser, a roll mill type disperser, an ultrasound type disperser, etc. It is especially preferable to treat with a wet high pressure or ultrahigh pressure homogenizer which enables dispersion under a condition of 50 MPa or higher, preferably 100 MPa or higher, more preferably 140 MPa or higher, because dispersion is promoted and a cellulose gel dispersion liquid which has low water absorbency and does not tend to swell can be obtained efficiently.

(Cellulose gel dispersion liquid)

The cellulose gel dispersion liquid obtained by the present invention is an aqueous dispersion of cellulose microgel which can be obtained by subjecting an aggregate of cellulose nanofibers containing carboxyl groups in acid form (-COOH) and having poor water dispersibility to mechanical treatment to reduce the size. The cellulose gel dispersion liquid of 1% (w/v) obtained by the present invention has a B-type viscosity (20°C, 60 rpm) of 500 to 9000 mPa·s. The water absorption rate is 50% or below, as measured by the method described in Example 1.

(Ultraviolet radiation treatment)

In the present invention, as necessary, the gelatinous substance dispersion liquid after the above slurrying is irradiated with ultraviolet radiation to thereby increase the flowability of the cellulose gel dispersion liquid after the mechanical treatment. The wavelength of the ultraviolet radiation is preferably 100 to 400 nm, more preferably 100 to 300 nm. Especially ultraviolet radiation with wavelength 135 to 260 nm is preferred, because such ultraviolet radiation directly acts on cellulose or hemicellulose to reduce the molecular weight, whereby short fibers are formed.

As an ultraviolet radiation source, a light source with the wavelength range of 100 to 400 nm can be used. Specific examples include a xenon short arc lamp, an ultrahigh pressure mercury lamp, a high pressure mercury lamp, a low pressure mercury lamp, a deuterium lamp and a metal halide lamp. These light sources can be used singly or in combination of two or more. It is especially preferable to use in combination a plurality of light sources having different wavelength characteristics, because irradiation with ultraviolet radiation of different wavelengths at the same time increases dissociation sites of cellulose or hemicellulose chains to thereby promote formation of short fibers.

As to a vessel in which the oxidized cellulosic material is placed during the irradiation with ultraviolet light in the present invention, for example in the case of using ultraviolet light with a wavelength longer than 300 nm, a vessel made of hard glass can be used. In the case of using ultraviolet light with a wavelength shorter than 300 nm, on the other hand, it is preferable to use a vessel made of silica glass which transmits more ultraviolet light. As to a material of that part of the vessel which is not involved in light transmission reaction, an appropriate material can be selected from materials that are less likely to be deteriorated by the wavelength of ultraviolet radiation used.

In the present invention, the concentration of the oxidized gelatinous substance dispersion liquid during the irradiation with ultraviolet radiation is preferably 0.1% by mass or higher, because energy efficiency increases. Further, the concentration is preferably 12% by mass or lower, because the cellulosic material has good flowability in an ultraviolet illuminator and reaction efficiency increases. Hence, the range of 0.1 to 12% by mass is preferred, more preferably 0.5 to 10% by mass, even more preferably 1 to 5% by mass.

The temperature of the gelatinous substance dispersion liquid during the irradiation with ultraviolet radiation is preferably 20°C or higher, because photo-oxidation reaction efficiency increases. Further, 95°C or below is preferred, because no adverse effect such as deterioration in quality of the cellulosic material will occur and, furthermore, the pressure in a reactor apparatus would not exceed the atmospheric pressure. Hence, the range of 20 to 95°C is preferred. There is also an advantage that when the temperature is within this range, it is not necessary to take pressure resistance into consideration in apparatus designing. The temperature is more preferably 20 to 80°C, even more preferably 20 to 50°C.

The pH during the irradiation with ultraviolet light is not particularly limited, but in terms of simplification of the process, it is preferable to treat within the neutral range, e.g., about pH 6.0 to 8.0.

In the ultraviolet radiation reaction, the level of radiation with which the gelatinous substance obtained from the acidification treatment is irradiated can be set arbitrarily by adjusting the residence time of the gelatinous substance in a radiation reactor apparatus or by adjusting the amount of energy of a radiation light source. Further, the amount of ultraviolet radiation with which the gelatinous substance is irradiated in the radiation reactor apparatus can be controlled arbitrarily by, for example, adjusting the concentration of the gelatinous substance dispersion liquid in the illuminator apparatus with dilution with water or by blowing air or an inert gas such as nitrogen into the cellulosic material. The conditions such as residence time and concentration can be set as appropriate according to desired quality of the gelatinous substance after the ultraviolet radiation reaction (e.g., fiber length, degree of polymerization of cellulose).

It is preferable to conduct the ultraviolet radiation treatment of the present invention in the presence of an auxiliary agent such as oxygen, ozone or peroxide (e.g., hydrogen peroxide, peracetic acid, sodium percarbonate, sodium perborate), because the efficiency of photo-oxidation reaction can be increased.

In the present invention, especially when ultraviolet radiation with wavelength 135 to 242 nm is applied, since, in general, air is present in a vapor phase area near the light source, ozone is generated. In the present invention, while air is continuously supplied to an area near the light source, ozone generated is continuously withdrawn, and the ozone thus withdrawn is injected into the gelatinous substance dispersion liquid, whereby ozone can be used as an auxiliary agent in the photo-oxidation reaction without supplying ozone from the outside of the system. Furthermore, by supplying oxygen to the vapor phase area near the light source, more ozone can be generated in the system, and the ozone thus

generated can be used as an auxiliary agent in the photo-oxidation reaction. It is also a great advantage of the present invention that ozone which is generated secondarily in the ultraviolet radiation reactor apparatus can be utilized.

In the present invention, the ultraviolet radiation treatment can be repeated multiple times. The number of times the treatment is repeated can be set as appropriate according to desired quality of the oxidized cellulosic material, post-treatment such as bleaching, etc. For example, ultraviolet radiation of 100 to 400 nm, preferably 135 to 260 nm, can be applied 1 to 10 times, preferably about 2 to 5 times, for about 0.5 to 3 hours each time, but the ultraviolet radiation treatment is not limited to this example.

(Cellulase treatment)

In the present invention, as necessary, cellulase is added to the gelatinous substance dispersion liquid after the slurrying to conduct hydrolysis treatment of cellulose chains, whereby the flowability of the cellulose gel dispersion liquid after the mechanical treatment can be improved. Cellulase that can be used in the present invention is not particularly limited, and any cellulase derived from cellulase-producing filamentous fungi, bacteria, actinomycete or basidiomycete or cellulase produced by genetic engineering such as gene recombination and cell fusion can be used singly or in admixture of two or more. A commercially-available cellulase can also be used. For example, Novozyme 476 available from Novozymes Japan, Cellulase AP3 available from Amano Enzyme Inc., Cellulase Onozuka RS available from Yakult Pharmaceutical Industry Co., Ltd., Optimase CX40L available from Genencor Kyowa Co., Ltd., GODO-TCL available from Godo Shusei Co., Ltd., Cellulase XL-522 available from Nagase ChemteX Corporation, Enzylon CM available from Rakuto Kasei Industrial Co., Ltd. or the like can be used.

In terms of treatment time and efficiency, it is sufficient to add cellulase in an amount of 0.001% by mass or more with respect to the absolute dry mass of the gelatinous substance in order to conduct desired enzyme reaction. Further, 10% by mass or less is preferred, because excess hydrolysis of cellulose can be inhibited and a reduction in the yield of the gelatinous substance can be prevented. Hence, the amount of cellulose added is preferably 0.001 to 10% by mass, more preferably 0.01 to 5% by mass, even more preferably 0.05 to 2% by mass, with respect to the absolute dry mass of the gelatinous substance. As used herein, the term "amount of cellulase" refers to the dry solid content of an aqueous solution of cellulase.

In terms of enzyme reaction efficiency, it is preferable to conduct the hydrolysis treatment with cellulase at a pH of 4 to 10, preferably pH 5 to 9, more preferably pH 6 to 8, at a temperature of 40 to 70°C, preferably 45 to 65°C, more preferably 50 to 60°C, for about 0.5 to 24 hours, preferably 1 to 10 hours, more preferably 2 to 6 hours.

(Oxidation decomposition treatment with hydrogen peroxide and ozone)

In the present invention, as necessary, hydrogen peroxide and ozone are added to the gelatinous substance dispersion liquid after the above slurry treatment to conduct oxidation decomposition treatment of the gelatinous substance dispersion liquid, whereby the flowability of the cellulose gel dispersion liquid after the mechanical treatment can be improved. Ozone used in this treatment can be generated by a publicly-known method with an ozone generator using air or oxygen as a material. Preferably, ozone is added in an amount (mass) that is 0.1- to 3-fold the absolute dry mass of the gelatinous substance. When the amount of ozone added is 0.1-fold the absolute dry mass of the gelatinous substance or greater, amorphous regions of cellulose can be decomposed sufficiently, making it possible to significantly reduce energy which is required for mechanical treatment in the subsequent step. On the other hand, when the amount of ozone added is 3-fold the absolute dry mass of the gelatinous substance or smaller, excess decomposition of cellulose can be inhibited, preventing a decrease in the yield of the gelatinous substance. The amount of ozone added is more preferably 0.3- to 2.5-fold, even more preferably 0.5- to 1.5-fold the absolute dry mass of the gelatinous substance.

The amount (mass) of hydrogen peroxide added is preferably 0.001- to 1.5-fold the absolute dry mass of the gelatinous substance. When hydrogen peroxide is used in an amount that is 0.001-fold the amount of gelatinous substance added or greater, synergistic action of ozone and hydrogen peroxide is exerted. Further, in the decomposition of the gelatinous substance, it is sufficient to use hydrogen peroxide in an amount which is about 1.5-fold the amount of the gelatinous substance or smaller, and addition of any greater amount is considered to lead to an increase in cost. The amount of hydrogen peroxide added is preferably 0.1- to 1.0-fold the absolute dry mass of the gelatinous substance.

In terms of oxidation decomposition reaction efficiency, it is preferable to conduct oxidation decomposition treatment with ozone and hydrogen peroxide at pH 2 to 12, preferably pH 4 to 10, more preferably pH 6 to 8, at a temperature of 10 to 90°C, preferably 20 to 70°C, more preferably 30 to 50°C, for about 1 to 20 hours, preferably 2 to 10 hours, more preferably 3 to 6 hours.

As to an apparatus for conducting the treatment with ozone and hydrogen peroxide, any apparatus which is commonly used in the art can be used. For example, an ordinary reactor having a reaction chamber, a stirrer, a chemical injector, a heater, and a pH electrode can be used.

After the treatment with ozone and hydrogen peroxide, residual ozone and hydrogen peroxide in the aqueous

solution act effectively in the subsequent step of defibration and dispersion treatment, whereby reduction in viscosity of the cellulose nanofiber dispersion liquid can further be promoted.

The above ultraviolet radiation treatment, cellulase treatment, and oxidation decomposition treatment with hydrogen peroxide and ozone can be conducted singly or in combination of two or more.

(Action of the present invention)

It is considered that the cellulose gel dispersion liquid obtained by the method of the present invention has low water absorbency and does not tend to swell because the carboxyl groups in cellulose derived from the oxidized cellulosic material have been converted by the acidification treatment into carboxyl groups in acid form (-COOH), which do not tend to dissociate, and, thus, has lower hydrophilicity and water absorbency than those of a conventional material having carboxyl groups in salt form (e.g., -COONa) and, therefore, swelling by water does not tend to occur.

The reason why the cellulose gel dispersion liquid obtained by conducting the ultraviolet radiation treatment, cellulase treatment, and oxidation decomposition treatment with hydrogen peroxide and ozone is excellent in flowability is inferred as follows. It is considered that when the gelatinous substance dispersion liquid is irradiated with ultraviolet light, active oxygen species having excellent oxidizability such as ozone are generated from dissolved oxygen in a hydration layer present in the surface of the gelatinous substance or from dissolved oxygen in water contained in the gelatinous substance, and cellulose chains constituting the gelatinous substance are oxidized and decomposed, whereby size reduction of the gelatinous substance is ultimately promoted. Further, it is considered that when cellulase is added to the gelatinous substance dispersion liquid to conduct hydrolysis of the gelatinous substance dispersion liquid, the robust network of cellulose molecules is destroyed, and the specific surface area of the gelatinous substance is increased, promoting size reduction of the gelatinous substance. Further, it is considered that when the gelatinous substance dispersion is treated with ozone and hydrogen peroxide, hydroxy radicals having excellent oxidizability are generated from the ozone and hydrogen peroxide, and cellulose chains in the gelatinous substance are efficiently oxidized and decomposed, promoting size reduction of the gelatinous substance. It is considered that as a result of reduction in size of the gelatinous substance, the B-type viscosity of the dispersion liquid is decreased significantly in the mechanical treatment in the subsequent step, and the flowability of the dispersion liquid is improved.

EXAMPLES

The present invention is described in more detail by the following Examples.

[Example 1]

Five grams (absolute dry weight) of bleached, unbeaten sulfite pulp derived from coniferous tree (Nippon Paper Chemicals Corporation) was added to 500 ml of an aqueous solution in which 78 mg (0.5 mmol) of TEMPO (Sigma Aldrich) and 754 mg (7 mmol) of sodium bromide were dissolved, and the mixture was stirred until the pulp was evenly dispersed. After 18 ml of an aqueous solution of sodium hypochlorite (effective chlorine: 5%) was added to the reaction system, the pH was adjusted to 10.3 with an aqueous solution of 0.5 N hydrochloric acid, and oxidation reaction was initiated. During the reaction, the pH of the system decreased, so an aqueous solution of 0.5 N sodium hydroxide was added successively to adjust the pH to pH 10. After the reaction was conducted for 2 hours, the reaction product was passed through a glass filter and washed sufficiently with water to obtain oxidized pulp. Then, 0.3% (w/v) oxidized pulp slurry was formed into nanofibers by a high shear mixer (Nihonseiki Kaisha Ltd., Excel auto homogenizer ED-7, peripheral speed 37 m/s) equipped with a rotary blade to obtain a cellulose nanofiber dispersion liquid. The pH of the cellulose nanofiber dispersion liquid was adjusted to pH 3 with an aqueous solution of 2 N hydrochloric acid to obtain a gelatinous aggregate. The aggregate (gelatinous substance) was washed sufficiently with water, and then water was added to prepare 2 L of 1% (w/v) slurry (gelatinous substance dispersion liquid). The gelatinous substance dispersion liquid was treated 10 times by an ultrahigh pressure homogenizer (treatment pressure: 140 MPa); consequently, a translucent gelatinous cellulose gel dispersion liquid was obtained. The B-type viscosity (60 rpm, 20°C) of 1% (w/v) cellulose gel dispersion liquid thus obtained was measured by a TV-10-type viscometer (Toki Sangyo Co., Ltd). The transparency (transmittance of 660-nm light) of 0.1% (w/v) cellulose gel dispersion liquid was measured by a UV-VIS spectrophotometer UV-265FS (Shimadzu Corporation). The amount of electric power consumed in the mechanical treatment by the ultrahigh pressure homogenizer was calculated by the following formula:

$$\text{(Electric power during treatment)} \times \text{(Treatment time)/(Amount of sample treated).}$$

Further, the water absorption rate of the cellulose gel dispersion liquid was measured by the following procedure. The concentration of the dispersion liquid was adjusted to give a B-type viscosity of 600 mPa·s (60 rpm, 20°C), and this dispersion liquid was applied to one surface of a polyethylene terephthalate film (thickness: 20 μm) with a bar coater (bar No.16) and dried at 50°C to form a film. The film thus obtained was stood still at 40°C under a water vapor saturation state (relative humidity: 95% or higher) for 20 days. The water absorption rate was calculated from an increase in mass of the film which was determined on the 20th day in accordance with the following formula:

$$\text{(Mass of film after water absorption test} - \text{Mass of film before water absorption test)/(Mass of film before water absorption test} \times 100).$$

The results are shown in Table 1.

[Example 2]

Except that the treatment pressure of the ultrahigh pressure homogenizer was 50 MPa, the procedure of Example 1 was repeated to obtain a cellulose gel dispersion liquid. The results are shown in Table 1.

[Comparative Example 1]

Except that the cellulose nanofiber dispersion liquid was treated by the ultrahigh pressure homogenizer (treatment pressure: 140 MPa) 10 times without being subjected to the acidification treatment, the procedure of Example 1 was repeated to obtain a dispersion liquid. The results are shown in Table 1.

[Comparative Example 2]

The B-type viscosity and transparency of a gelatinous substance dispersion liquid of Example 1 were measured as in Example 1. Further, the water absorption rate of the gelatinous substance was measured in accordance with the method described in Example 1 using a dispersion liquid of the gelatinous substance in place of the cellulose gel dispersion liquid. The results are shown in Table 1.

[Example 3]

Except that 2 L of 1% (w/v) gelatinous substance dispersion liquid was irradiated with ultraviolet light with 254 nm wavelength by a 20-W low pressure mercury lamp for 6 hours while blowing air into the dispersion liquid and thereafter the gelatinous substance dispersion liquid was subjected to the treatment by the ultrahigh pressure homogenizer (treatment pressure 140 MPa; 10 times), the procedure of Example 1 was repeated to obtain a cellulose gel dispersion liquid. The results are shown in Table 1.

[Example 4]

Except that 1% (w/v) hydrogen peroxide was added during the irradiation with ultraviolet light, the procedure of Example 3 was repeated to obtain a nanofiber dispersion liquid. The results are shown in Table 1.

[Comparative Example 3]

Except that the cellulose nanofiber dispersion liquid was subjected to ultraviolet radiation treatment without being subjected to the acidification treatment and thereafter no mechanical treatment by the ultrahigh pressure homogenizer was conducted, the procedure of Example 3 was repeated to obtain a dispersion liquid. The results are shown in Table 1.

[Comparative Example 4]

Except that the cellulose nanofiber dispersion liquid was not subjected to the acidification treatment, the procedure of Example 3 was repeated to obtain a dispersion liquid. The results are shown in Table 1.

[Example 5]

Except that no ultraviolet radiation treatment was conducted and, instead, commercially-available cellulase (Novozymes Japan, Novozyme 476) was added to 2 L (pH 7.3) of 1% (w/v) gelatinous substance dispersion liquid in an amount of 2% by mass with respect to the absolute dry mass of the gelatinous substance, and the mixture was treated at 30°C for 6 hours, boiled to deactivate the cellulase and then treated by the ultrahigh pressure homogenizer (treatment pressure 140 MPa; 10 times), the procedure of Example 3 was repeated to obtain a cellulose gel dispersion liquid. The results are shown in Table 1.

[Comparative Example 5]

Except that the cellulose nanofiber dispersion liquid was subjected to the cellulase treatment without being subjected to the acidification treatment and no mechanical treatment was conducted thereafter, the procedure of Example 5 was repeated to obtain a dispersion liquid. The results are shown in Table 1.

[Example 6]

Except that no ultraviolet radiation treatment was conducted and, instead, ozone and hydrogen peroxide were added to 2 L of 1% (w/v) gelatinous substance dispersion liquid to give an ozone concentration of 6 g/L (corresponding to 0.6-fold the absolute dry mass of the gelatinous substance) and a hydrogen peroxide concentration of 3 g/L (corresponding to 0.3-fold the absolute dry mass of the gelatinous substance) and the mixture was treated at room temperature for 6 hours and then subjected to the treatment by the ultrahigh pressure homogenizer (treatment pressure 140 MPa; 10 times), the procedure of Example 3 was repeated to obtain a cellulose gel dispersion liquid. The results are shown in Table 1.

[Comparative Example 6]

Except that the cellulose nanofiber dispersion liquid was subjected to oxidation decomposition treatment with hydrogen peroxide and ozone without being subjected to the acidification treatment and thereafter no mechanical treatment was conducted, the procedure of Example 6 was repeated to obtain a dispersion liquid. The results are shown in Table 1.

[Example 7]

Except that irradiation with ultraviolet light having a wavelength range of 260 to 400 nm with a main peak at 310 nm was conducted using the 20-W low pressure mercury lamp, the procedure of Example 3 was repeated to obtain a cellulose gel dispersion liquid. The results are shown in Table 1.

[Example 8]

Except that irradiation with ultraviolet light having a wavelength range of 340 to 400 nm with a main peak at 360 nm was conducted using the 20-W low pressure mercury lamp, the procedure of Example 3 was repeated to obtain a cellulose gel dispersion liquid. The results are shown in Table 1.

[Example 9]

Except that the treatment pressure of the ultrahigh pressure homogenizer was 100 MPa, the procedure of Example 3 was repeated to obtain a cellulose gel dispersion liquid. The results are shown in Table 1.

[Example 10]

Except that the treatment pressure of the ultrahigh pressure homogenizer was 50 MPa, the procedure of Example 3 was repeated to obtain a cellulose gel dispersion liquid. The results are shown in Table 1.

[Example 11]

Except that the treatment pressure of the ultrahigh pressure homogenizer was 30 MPa, the procedure of Example 3 was repeated to obtain a cellulose gel dispersion liquid. The results are shown in Table 1.

[Example 12]

Except that a high shear mixer (peripheral speed 37 m/s, Nihonseiki Kaisha Ltd., treatment time 30 minutes) equipped with a rotary blade was used in place of the ultrahigh pressure homogenizer in the mechanical treatment, the procedure of Example 3 was repeated to obtain a cellulose gel dispersion liquid. The results are shown in Table 1.

[Example 13]

Except that powdery cellulose (Nippon Paper Chemicals Corporation; particle size 75 μm) was used as a cellulosic material, the procedure of Example 3 was repeated to obtain a cellulose gel dispersion liquid. The results are shown in Table 1.

[Example 14]

Except that powdery cellulose (Nippon Paper Chemicals Corporation; particle size 75 μm) was used as a cellulosic material, the procedure of Example 10 was repeated to obtain a cellulose gel dispersion liquid. The results are shown in Table 1.

[Example 15]

Except that powdery cellulose (Nippon Paper Chemicals Corporation; particle size 75 μm) was used as a cellulosic material, the procedure of Example 11 was repeated to obtain a cellulose gel dispersion liquid. The results are shown in Table 1.

[Table 1]

| | Raw material | Defibration and dispersion step | Acidification step | Post-treatment | Mechanical step | | Dispersion | | | |
|---|---|---|---|---|---|---|---|---|---|---|
| | | Disperser | | | Disperser | Pressure | B-type viscosity (mPa · s) | Transparency (%) | Power consumption (kWh/kg) | Water absorption rate (%) |
| Example 1 | Sulfite pulp | Rotary blade mixer | Conducted | Not conducted | Ultrahigh pressure homogenizer | 140 MPa | 5345 | 57.5 | 254 | 35 |
| Example 2 | Sulfite pulp | Rotary blade mixer | Conducted | Not conducted | Ultrahigh pressure homogenizer | 50 MPa | 7998 | 49.3 | 112 | 43 |
| Comparative Example 1 | Sulfite pulp | Rotary blade mixer | Not conducted | Not conducted | Ultrahigh pressure homogenizer | 140 MPa | 1470 | 95.9 | 212 | 53 |
| Comparative Example 2 | Sulfite pulp | Rotary blade mixer | Conducted | Not conducted | Not conducted | - | 9998 | 7.3 | - | 76 |
| Example 3 | Sulfite pulp | Rotary blade mixer | Conducted | UV treatment (254 nm) | Ultrahigh pressure homogenizer | 140 MPa | 1980 | 71.3 | 60 | 27 |
| Example 4 | Sulfite pulp | Rotary blade mixer | Conducted | UV treatment (254 nm) + $H_2O_2$ | Ultrahigh pressure homogenizer | 140 MPa | 1860 | 75.5 | 57 | 25 |
| Comparative Example 3 | Sulfite pulp | Rotary blade mixer | Not conducted | UV treatment (254 nm) | Not conducted | - | 9903 | 10.2 | - | 66 |
| Comparative Example 4 | Sulfite pulp | Rotary blade mixer | Not conducted | UV treatment (254 nm) | Ultrahigh pressure homogenizer | 140 MPa | 625 | 98.4 | | 68 |
| Example 5 | Sulfite pulp | Rotary blade mixer | Conducted | Cellulase | Ultrahigh pressure homogenizer | 140 MPa | 2350 | 66.8 | 68 | 30 |

(continued)

| | Raw material | Defibration and dispersion step | Acidification step | Post-treatment | Mechanical step | | Dispersion | | | |
|---|---|---|---|---|---|---|---|---|---|---|
| | | Disperser | | | Disperser | Pressure | B-type viscosity (mPa · s) | Transparency (%) | Power consumption (kWh/kg) | Water absorption rate (%) |
| Comparative Example 5 | Sulfite pulp | Rotary blade mixer | Not conducted | Cellulase | Not conducted | - | 9633 | 12.3 | - | 64 |
| Example 6 | Sulfite pulp | Rotary blade mixer | Conducted | Ozone $H_2O_2$ | Ultrahigh pressure homogenizer | 140 MPa | 2575 | 61.7 | 75 | 33 |
| Comparative Example 6 | Sulfite pulp | Rotary blade mixer | Not conducted | Ozone $H_2O_2$ | Not conducted | - | 9965 | 11.2 | - | 70 |
| Example 7 | Sulfite pulp | Rotary blade mixer | Conducted | UV treatment (310 nm) | Ultrahigh pressure homogenizer | 140 MPa | 2450 | 68.6 | 98 | 36 |
| Example 8 | Sulfite pulp | Rotary blade mixer | Conducted | UV treatment (360 nm) | Ultrahigh pressure homogenizer | 140 MPa | 2980 | 61.8 | 137 | 33 |
| Example 9 | Sulfite pulp | Rotary blade mixer | Conducted | UV treatment (254 nm) | Ultrahigh pressure homogenizer | 100 MPa | 1670 | 68.4 | 39 | 35 |
| Example 10 | Sulfite pulp | Rotary blade mixer | Conducted | UV treatment (254 nm) | Ultrahigh pressure homogenizer | 50 MPa | 1245 | 62.7 | 22 | 38 |
| Example 11 | Sulfite pulp | Rotary blade mixer | Conducted | UV treatment (254 nm) | Ultrahigh pressure homogenizer | 30 MPa | 1058 | 56.9 | 18 | 42 |
| Example 12 | Sulfite pulp | Rotary blade mixer | Conducted | UV treatment (254 nm) | Rotary blade mixer | - | 2995 | 50.5 | 88 | 45 |

(continued)

| | Raw material | Defibration and dispersion step | Acidification step | Post-treatment | Mechanical step | | Dispersion | | | |
|---|---|---|---|---|---|---|---|---|---|---|
| | | Disperser | | | Disperser | Pressure | B-type viscosity (mPa · s) | Transparency (%) | Power consumption (kWh/kg) | Water absorption rate (%) |
| Example 13 | Powdery cellulose | Rotary blade mixer | Conducted | UV treatment (254 nm) | Ultrahigh pressure homogenizer | 140 MPa | 1320 | 83.8 | 47 | 15 |
| Example 14 | Powdery cellulose | Rotary blade mixer | Conducted | UV treatment (254 nm) | Ultrahigh pressure homogenizer | 50 MPa | 945 | 79 | 22 | 22 |
| Example 15 | Powdery cellulose | Rotary blade mixer | Conducted | UV treatment (254 nm) | Ultrahigh pressure homogenizer | 30 MPa | 760 | 70.2 | 13 | 25 |

## Claims

1. A method of producing a cellulose gel dispersion liquid, comprising the steps of:

   (A) oxidizing a cellulosic material with an oxidizing agent in the presence of (1) an N-oxyl compound and (2) a compound selected from the group consisting of a bromide, an iodide and a mixture thereof;
   (B) subjecting the cellulosic material obtained in the step (A) to defibration and dispersion treatment so that the cellulosic material is formed into nanofibers;
   (C) acidifying the cellulose nanofiber obtained in the step (B) to form a gelatinous substance;
   (D) washing the gelatinous substance obtained in the step (C) with water and then slurrying the gelatinous substance to prepare a gelatinous substance dispersion liquid; and
   (E) subjecting the dispersion liquid obtained in the step (D) to mechanical treatment to obtain a cellulose gel dispersion liquid.

2. The method of Claim 1, further comprising, after the step (D) and before the step (E), irradiating the dispersion liquid with ultraviolet light.

3. The method of Claim 1, further comprising, after the step (D) and before the step (E), adding cellulase to the dispersion liquid to conduct hydrolysis treatment of the dispersion liquid.

4. The method of Claim 1, further comprising, after the step (D) and before the step (E), adding hydrogen peroxide and ozone to the dispersion liquid to conduct oxidation decomposition treatment of the dispersion liquid.

5. The method of any one of Claims 1 to 4, wherein powdery cellulose is used as the cellulosic material.

6. The method of any one of Claims 1 to 5, wherein the mechanical treatment is conducted at a pressure of 50 MPa or higher.

7. A cellulose gel dispersion liquid produced by the method of any one of Claims 1 to 6.

## Patentansprüche

1. Verfahren zur Herstellung einer Cellulose-Gel-Dispersionsflüssigkeit, umfassend die Schritte:

   (A) Oxidieren eines cellulosischen Materials mit einem Oxidationsmittel in Gegenwart von (1) einer N-Oxyl-Verbindung und (2) einer Verbindung ausgewählt aus der Gruppe bestehend aus einem Bromid, einem Iodid und einer Mischung davon;
   (B) Unterziehen des in dem Schritt (A) erhaltenen cellulosischen Materials einer Zerfaserungs- und Dispersionsbehandlung, sodass das cellulosische Material in Nanofasern geformt wird;
   (C) Ansäuern der in dem Schritt (B) erhaltenen Cellulose-Nanofaser, um eine gallertartige Substanz zu bilden;
   (D) Waschen der in dem Schritt (C) erhaltenen gallertartigen Substanz mit Wasser und anschließendes Aufschlämmen der gallertartigen Substanz, um eine Dispersionsflüssigkeit einer gallertartigen Substanz herzustellen; und
   (E) Unterziehen der in dem Schritt (D) erhaltenen Dispersionsflüssigkeit einer mechanischen Behandlung, um eine Cellulose-Gel-Dispersionsflüssigkeit zu erhalten.

2. Verfahren nach Anspruch 1, ferner umfassend, nach dem Schritt (D) und vor dem Schritt (E), ein Bestrahlen der Dispersionsflüssigkeit mit ultraviolettem Licht.

3. Verfahren nach Anspruch 1, ferner umfassend, nach dem Schritt (D) und vor dem Schritt (E), ein Zugeben von Cellulase zu der Dispersionsflüssigkeit, um eine Hydrolysebehandlung der Dispersionsflüssigkeit durchzuführen.

4. Verfahren nach Anspruch 1, ferner umfassend, nach dem Schritt (D) und vor dem Schritt (E), ein Zugeben von Wasserstoffperoxid und Ozon zu der Dispersionsflüssigkeit, um eine oxidative Zersetzungsbehandlung der Dispersionsflüssigkeit durchzuführen.

5. Verfahren nach einem der Ansprüche 1 bis 4, wobei pulverförmige Cellulose als das cellulosische Material verwendet

wird.

**6.** Verfahren nach einem der Ansprüche 1 bis 5, wobei die mechanische Behandlung bei einem Druck von 50 MPa oder höher durchgeführt wird.

**7.** Cellulose-Gel-Dispersionsflüssigkeit, hergestellt durch das Verfahren nach einem der Ansprüche 1 bis 6.

**Revendications**

**1.** Procédé de production d'un liquide de dispersion de gel de cellulose, comprenant les étapes qui consistent à :

(A) oxyder une matière cellulosique avec un agent oxydant en présence de (1) un composé de N-oxyle et (2) un composé sélectionné dans le groupe constitué d'un bromure, d'un iodure et d'un mélange de ceux-ci ;
(B) soumettre la matière cellulosique obtenue à l'étape (A) à un traitement de défibrage et de dispersion de telle sorte que la matière cellulosique prenne la forme de nanofibres ;
(C) acidifier les nanofibres de cellulose obtenues à l'étape (B) pour former une substance gélatineuse ;
(D) laver la substance gélatineuse obtenue à l'étape (C) avec de l'eau, puis mettre la substance gélatineuse en suspension pour préparer un liquide de dispersion de substance gélatineuse ; et
(E) soumettre le liquide de dispersion obtenu à l'étape (D) à un traitement mécanique pour obtenir un liquide de dispersion de gel de cellulose.

**2.** Procédé selon la revendication 1, comprenant en outre, après l'étape (D) et avant l'étape (E), l'irradiation du liquide de dispersion avec de la lumière ultraviolette.

**3.** Procédé selon la revendication 1, comprenant en outre, après l'étape (D) et avant l'étape (E), l'ajout de cellulase au liquide de dispersion pour effectuer un traitement hydrolytique du liquide de dispersion.

**4.** Procédé selon la revendication 1, comprenant en outre, après l'étape (D) et avant l'étape (E), l'ajout de peroxyde d'hydrogène et d'ozone au liquide de dispersion pour effectuer un traitement de décomposition par oxydation du liquide de dispersion.

**5.** Procédé selon l'une quelconque des revendications 1 à 4, dans lequel de la cellulose poudreuse est utilisée comme matière cellulosique.

**6.** Procédé selon l'une quelconque des revendications 1 à 5, dans lequel le traitement mécanique est effectué à une pression de 50 MPa ou plus.

**7.** Liquide de dispersion de gel de cellulose produit par le procédé selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **TSUGUYUKI, SAITO et al.** *Biomacromolecules,* 13 July 2007, vol. 8 (8), 2485-2491
- **SAITO, T. et al.** *Cellulose Commun.,* 2007, vol. 14 (2), 62